(19) Europäisches Patentamt
European Patent Office
Office européen des brevets

(11) **EP 4 723 612 A1**

(12) **EUROPEAN PATENT APPLICATION**

(43) Date of publication:
08.04.2026 Bulletin 2026/15

(21) Application number: 25206398.7

(22) Date of filing: 02.10.2025

(51) International Patent Classification (IPC):
*H04N 1/387* (2006.01)    *H04N 1/00* (2006.01)

(52) Cooperative Patent Classification (CPC):
**H04N 1/3878; H04N 1/00681; H04N 1/00718; H04N 1/00753;** H04N 1/00737; H04N 1/00742; H04N 1/00758; H04N 1/00769; H04N 1/00774

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 07.10.2024 JP 2024175565

(71) Applicant: KYOCERA Document Solutions Inc.
Osaka-shi, Osaka 540-8585 (JP)

(72) Inventor: TAGAWA, Hirotoshi
Osaka, 540-8585, (JP)

(74) Representative: Winter, Brandl - Partnerschaft mbB
Alois-Steinecker-Straße 22
85354 Freising (DE)

(54) **IMAGE SCANNING APPARATUS WITH CALIBRATED IMAGE SHADOW DETECTION THRESHOLD FOR READ DOCUMENT SKEW DETECTION**

(57) A transportation device is configured to transport a document sheet along a transportation path. An image sensor is configured to optically scan an image at a predetermined scanning position in the transportation path and generate a scanned image that includes an image of the document sheet. An opposing member is arranged oppositely to the image sensor at the predetermined scanning position. An oblique motion detecting unit is configured to detect oblique motion of the document sheet on the basis of a shadow image of the document sheet that appears in a scanned image obtained by the image sensor. Further, the oblique motion detecting unit (a) derives a threshold value on the basis of a density of an image of the opposing member in the scanned image, and (b) detects the shadow image on the basis of the derived threshold value.

FIG. 4

EP 4 723 612 A1

**Description**

BACKGROUND

1. FIELD OF THE PRESENT INVENTION

The present invention relates to an image scanning apparatus.

2. DESCRIPTION OF THE RELATED ART

When an image scanning apparatus scans a document image from a document sheet using an image sensor, the image scanning apparatus calculates an oblique motion amount of the document sheet on the basis of a shadow image generated on an opposing member to the image sensor by the document sheet. In the image scanning apparatus, a sensor gain of the image sensor is changed correspondingly to a scanned brightness value of the opposing member.

In the aforementioned image scanning apparatus, the shadow image in the scanned image may not be detected properly due to some surface lightness values of the opposing member. If the surface lightness value of the opposing member is high, then a density of the shadow image in the scanned image is low and therefore, the shadow image may not be detected correctly. Further, if the surface lightness value of the opposing member is low, a density difference between the shadow image and a background part other than the shadow image in the scanned image and therefore, the shadow image may not be detected correctly.

Furthermore, if the sensor gain is changed as mentioned, then a density of the shadow image in the scanned image changes and therefore, a proper threshold value is hardly set to detect the shadow image.

SUMMARY

An image scanning apparatus according to the present invention includes a transportation device, an image sensor, an opposing member, and an oblique motion detecting unit. The transportation device is configured to transport a document sheet along a transportation path. The image sensor is configured to optically scan an image at a predetermined scanning position in the transportation path and generate a scanned image that includes an image of the document sheet. The opposing member is arranged oppositely to the image sensor at the predetermined scanning position. The oblique motion detecting unit is configured to detect oblique motion of the document sheet on the basis of a shadow image of the document sheet that appears in a scanned image obtained by the image sensor. Further, the oblique motion detecting unit (a) derives a threshold value on the basis of a density of an image of the opposing member in the scanned image, and (b) detects the shadow image on the basis of the derived threshold value.

These and other objects, features and advantages of the present invention will become more apparent upon reading of the following detailed description along with the accompanied drawings.

BRIEF DESCRIPTION OF THE DRAWINGS

Fig. 1 shows a side view an internal configuration of an image scanning apparatus in the present invention;

Fig. 2 shows a block diagram that indicates an electronic configuration of the image scanning apparatus shown in Fig. 1;

Fig. 3 shows a diagram that explains imaging of a shadow image by an image sensor 31 shown in Fig. 1; and

Fig. 4 shows a diagram that indicates an example of a shadow image in a scanned image.

DETAILED DESCRIPTION

Hereinafter, an embodiment according to an aspect of the present invention will be explained with reference to drawings.

Embodiment 1.

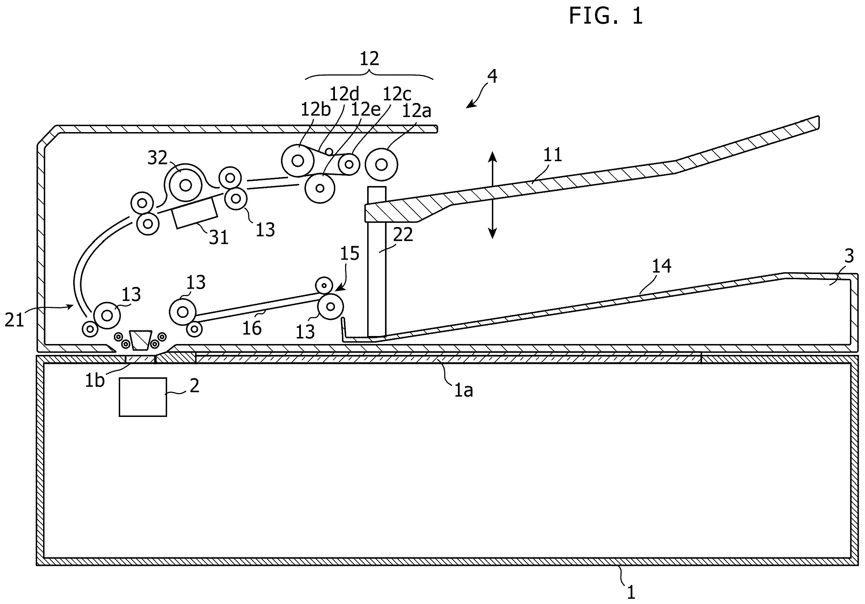

Fig. 1 shows a side view an internal configuration of an image scanning apparatus in the present invention The image scanning apparatus shown in Fig. 1 is an apparatus such as scanner, copier, facsimile device, or multi function peripheral, and includes an auto document feeder as a document feeding device. The image scanning apparatus shown in Fig. 1 includes an apparatus main body 1, contact glasses 1a and 1b arranged on an upper surface of the main body 1, an image sensor 2, and a document cover 3. The document cover 3 includes the auto document feeder 4.

The contact glass 1a is a transparent member on which a document is put when performing image scanning without the auto document feeder 4. The contact glass 1b is a transparent member on which a document passes when performing image scanning of a document image while automatically transporting a document with the auto document feeder 4.

The image sensor 2 scans a document image from a document sheet. Specifically, the image sensor 2 is a sensor that optically scans an image of a document sheet that passes at a predetermined position in a transportation path of a document when performing image scanning of a document image while automatically transporting a document with the auto document feeder 4. The image sensor 2 scans the document image line by line. The image sensor 2 includes a light source (light emitting diode or the like) and a light receiving element (line sensor or the like), and causes the light source to emit light, and causes the light receiving element to detect reflection light that reflects a document or the like through the contact glass 1a or 1b and outputs an electric signal corresponding to a light amount of the reflection light. A controller 41 mentioned below receives this electric signal, and generates a document image (i.e. image data of the document image) on the basis of this electric signal.

A document cover 3 is a rotatable member installed so as to be capable of contacting with a surface area of the contact glass 1a when it rotates, and presses a document against the contact glass 1a and prevents environmental light from entering through the contact glass 1a to the inside of the apparatus during image scanning.

Further, the auto document feeder 4 includes a sheet feeding tray 11 on which a document sheet is put, and a transportation device 21. The transportation device 21 feeds a document sheet one by one from a document sheet bunch on the sheet feeding tray 11 and transports the document sheet along a transportation path to an output tray 14. The auto document feeder 4 controls the transportation device 21 and using the transportation device 21, causes the document sheet to pass through a scanning position of the image sensor (a position on the contact glass 1b) one by one and outputs the document sheet to the output tray 14.

Specifically, the transportation device 21 includes a sheet feeding unit 12 and transportation rollers 13 arranged along the transportation path, and feeds a document sheet (a top document sheet in the document sheet bunch) using the sheet feeding unit 12 and transports the document sheet using the transportation rollers 13. The sheet feeding unit 12 includes a sheet feeding roller 12a, a driving roller 12b, a driven roller 12c, a transportation belt 12d, and a support roller 12e, and draws a document sheet on the sheet feeding tray 11 one by one onto the transportation path along the transportation belt 12d using the sheet feeding roller 12a.

Further, the image sensor 2 can change an image scanning position using an unshown driving device; and when performing image scanning with the auto document feeder 4, the image scanning position of the image sensor 2 is set as a passing position of a document on the contact glass 1b, and the image sensor 2 optically scans an image of the document in transportation by the auto document feeder 4 when the document passes on the contact glass 1b. Here, the image sensor 2 is a color image sensor, and scans document images of plural colors such as RGB at image scanning positions different from each other along a transportation direction. In this embodiment, a CIS (Contact Image Sensor) is used as the image sensor 2; and when performing image scanning with the auto document feeder 4, the image sensor 2 is arranged right below the contact glass 1b.

The sheet feeding roller 12a, the driving roller 12b and the transportation rollers 13 are driven by a driving device (not shown) such as motors.

The output tray 14 is located under the sheet feeding tray 11 and is a tray on which document sheets outputted from an ejection port 15 as an end of the transportation path are piled. The ejection port 15 outputs a document sheet onto the output tray 14 at the end of the transportation path.

Further, the image scanning apparatus shown in Fig. 1 includes a lifting device 22, an image sensor 31, and a sensor roller 32.

The lifting device 22 lifts and lowers the sheet feeding tray 11 in accordance with an existing method. Specifically, the lifting device 22 includes a driving force source (motor, actuator or the like) that electrically operates, and mechanically lifts and lowers the sheet feeding tray 11 using driving force generated by the driving force source.

Further, the image sensor 31 optically scans an image at a predetermined scanning position in the transportation path during a predetermined period (including a passing period of the document sheet) and thereby generates a scanned image that includes an image of the document sheet. The image sensor 31 is identical or similar to the image sensor 2, and for example, a CIS. Here, an image of one surface among both surfaces of the document sheet is scanned by the image sensor 31, and an image of the other surface is scanned by the image sensor 2.

The sensor roller 32 is an opposing member arranged oppositely to the image sensor 31 at a predetermined position in the transportation path (image scanning position), and transports the document sheet while causing the document sheet to contact with the image sensor 31.

Further, in this embodiment, the sensor roller 32 is a transportation roller of which a surface is white, and is used as a white reference member to obtain a white reference value for the shading correction by the image sensor 31.

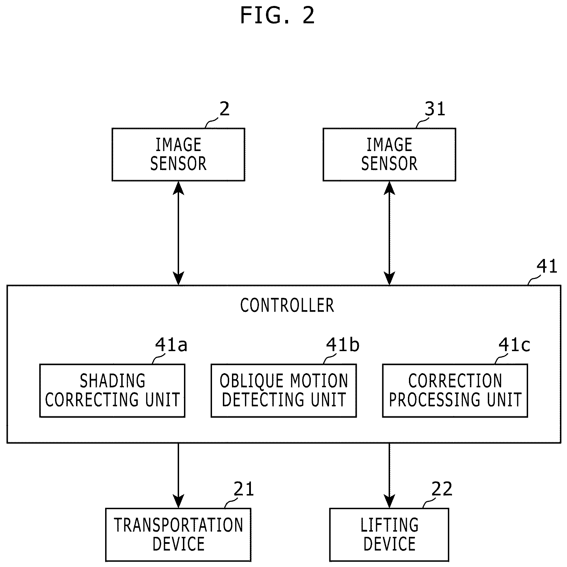

Fig. 2 shows a block diagram that indicates an electronic configuration of the image scanning apparatus shown in Fig. 1. As shown in Fig. 2, this image scanning apparatus further includes a controller 41. The controller 41 includes a processor that executes a program, an ASIC (Application Specific Integrated Circuit) and/or the like, and controls the image sensors 2 and 31, the auto document feeder 4 (i.e. the transportation device 21, the lifting device 22 and the like) and thereby performs image scanning of the document sheet and thereby acquires image data of an image of the document sheet (i.e. a document image).

Further, this controller 41 acts as a shading correcting unit 41a, an oblique motion detecting unit 41b, and a correction processing unit 41c.

The shading correcting unit 41a scans a surface image of the sensor roller 32 at a status without any document sheets using the image sensor 31 and thereby obtains a scanned image, and sets a white reference value on the basis of the image data (density) of the scanned data and stores the white reference value into a non-volatile memory (not shown), and performs shading correction of the scanned image (an image of the document sheet) using the white reference value.

The oblique motion detecting unit 41b detects oblique motion of the document sheet on the basis of a shadow image of the document sheet that appears in the scanned image obtained by the image sensor 31.

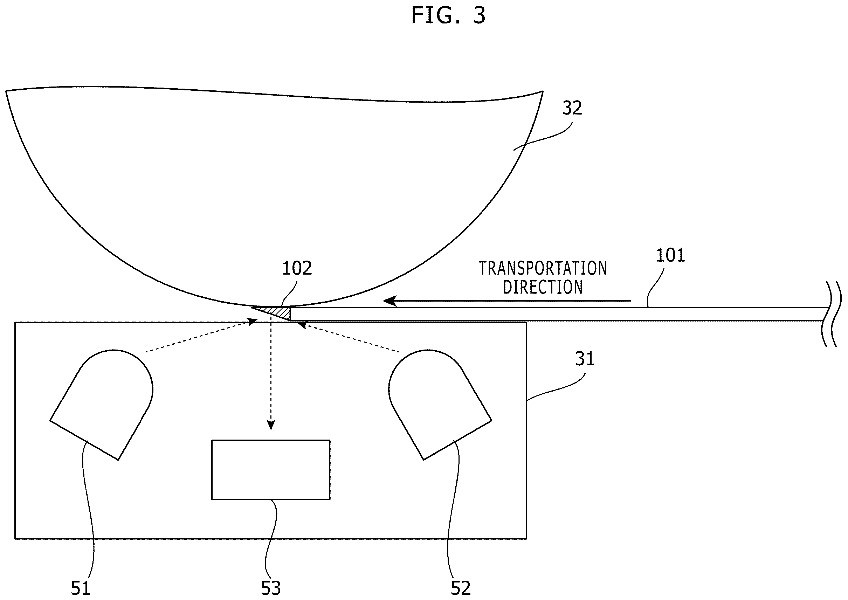

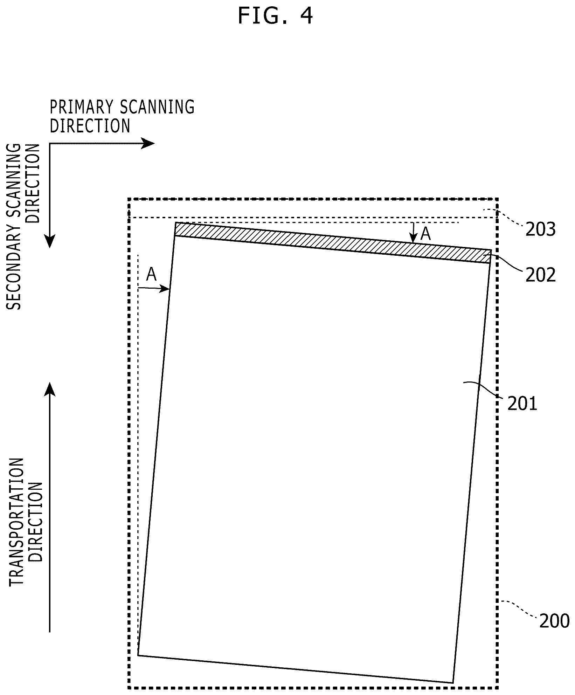

Fig. 3 shows a diagram that explains imaging of a shadow image by an image sensor 31 shown in Fig. 1. Fig. 4 shows a diagram that indicates an example of a shadow image in a scanned image. As shown in Fig. 3, for example, the image sensor 31 includes a first light source 51 and a second light source 52 arranged along the transportation path, and further includes an image sensor element 53 as a light receiving element. The second light source 52 is arranged in an upstream side from the first light source 51 in the transportation path. Further, a shadow image 102 is formed in front of the document sheet 101 due to thickness of the document sheet 101. Therefore, as shown in Fig. 4, for example, if the document sheet 101 obliquely moves with an oblique motion angle A, then in the scanned image 200, an image 201 and a shadow image 202 of the document sheet 101 appear obliquely with the oblique motion angle A.

The oblique motion detecting unit 41b (a) derives a threshold value on the basis of a density of an image 203 (an image of a part that the shadow image does not appear) of the sensor roller 32 (the opposing member) in the scanned image 200, and (b) detects the shadow image 202 using the derived threshold value. Here, the image 203 is an image with a predetermined height at the head of the scanned image 200 as shown in Fig. 4, for example.

For example, the oblique motion detecting unit 41b binarizes the scanned image 200 with the derived threshold value and thereby generates a binary image, and detects as the shadow image a band-shaped image that firstly appears when searching from the front end along a secondary scanning direction in the binary image.

In Embodiment 1, when using a specific test sheet as the document sheet, the oblique motion detecting unit 41b derives the aforementioned threshold value in advance, and afterward, the oblique motion detecting unit 41b detects a shadow image of a document sheet of a user (i.e. a document sheet to be image-scanned) using the threshold value and detects oblique motion. Specifically, the specific test sheet is a thin sheet of which a shadow image 102 tends not to appear (i.e. a height of the shadow image is small) (for example, a white paper sheet of a basis weight in a range from 35 to 50 grams per square meter around), and the oblique motion detecting unit 41b derives the aforementioned threshold value on the basis of (a) a density of an image 203 of the sensor roller 32 (the opposing member) in a scanned image 200 of the specific test sheet and (b) a density of a shadow image 202 of the specific test sheet in a scanned image of the specific test sheet.

For example, assuming that a smallest density value in a density range of the image 203 is Dmin and a largest density value in a density range of the shadow image 202 is Dmax, an average value of Dmax and Dmin is derived as the aforementioned threshold value Th, as shown in the following formula.

$$Th = (Dmax+Dmin)/2$$

For example, in case of 8-bit RGB data, a density range is from 0 to 255, and if a density range (density distribution) of the image 203 of a surface of the sensor roller 32 is from 220 to 230 and a density range of the shadow image 202 is from 210 to 214, then the smallest density value Dmin of the image 203 is 220 and the largest density value Dmax is 214, and therefore, the aforementioned threshold value Th is set as the average value 217.

On the other hand, when a lightness value of a surface of the sensor roller 32 is high (i.e. if a reflectance of light from the image sensor 31 is high), for example, if a density range (density distribution) of the image 203 is from 234 to 244 and a density range of the shadow image 202 is from 218 to 222, then the smallest density value Dmin of the image 203 is 234 and the largest density value Dmax is 222, and therefore, the aforementioned threshold value Th is set as the average value 228.

Such that the threshold value is set in the aforementioned manner, the threshold value is set to be higher correspondingly to a higher lightness value of a surface of the sensor roller 32, and therefore, even if a density of the shadow image becomes low due to a high lightness value of a surface of the sensor roller 32 (i.e. even if RGB values of the shadow image become high), the threshold value (RGB values) is set to be high, and therefore, the shadow image is correctly detected.

Further, the oblique motion detecting unit 41b determines an oblique motion angle A of the document sheet 101 on the basis of the aforementioned scanned image 200. Specifically, as shown in Fig. 4, for example, an angle between a primary scanning direction and a direction that the shadow image 202 extends in the scanned image 200 (i.e. a direction of a long-side edge of the shadow image 202) is determined as the oblique motion angle A.

Furthermore, the correction processing unit 41c rotates the image 201 of the document sheet in the scanned image 200 by the oblique motion angle A toward an opposite direction to the oblique motion and thereby, corrects the image 201 of the document sheet, and outputs the corrected image 201.

The following part explains a behavior of the aforementioned image scanning apparatus.

The oblique motion detecting unit 41b derives the aforementioned threshold value in advance on the basis of a density of the image 203 of the sensor roller 32 (the opposing member) in the scanned image as mentioned.

Afterward, when a document sheet 101 of a user is put on the sheet feeding tray 11 and a predetermined user operation is detected, the controller 41 starts an image scanning operation (scan job) of the document sheet. When starting the image scanning operation, the controller 41 transports the document sheet 101 on the sheet feeding tray 11 along the transportation path to the output tray 14 one by one using the transportation device 21 and performs image scanning using the image sensor 31 or the like.

In the aforementioned operation, the oblique motion detecting unit 41b acquires a scanned image 200 from the image sensor 31, detects a shadow image 202 in the scanned image 200 using the aforementioned threshold value, and on the basis of the shadow image 202, determines whether oblique motion occurs or not and derives an oblique motion angle A.

Subsequently, if oblique motion detecting unit 41b determines that the document sheet 101 obliquely moves, then the correction processing unit 41c rotates and corrects the document image (the image 201 of the document sheet 101) in the scanned image 200 on the basis of the derived oblique motion angle A.

As mentioned, in the aforementioned Embodiment 1, the image sensor 31 optically scans an image at a predetermined scanning position in a transportation path of a document sheet and thereby generates a scanned image 200 that includes an image 201 of the document sheet. The sensor roller 32 is an opposing member arranged oppositely to the image sensor 31 at the predetermined scanning position. The oblique motion detecting unit 41b detects oblique motion of the document sheet on the basis of a shadow image 202 of the document sheet that appears in the scanned image 200 obtained by the image sensor 31. Further, the oblique motion detecting unit 41b (a) derives a threshold value on the basis of a density of an image 203 of the sensor roller 32 in the scanned image 200, and (b) detects the shadow image 202 using the derived threshold value.

Consequently, regardless of a surface lightness value of the opposing member (here, the sensor roller 32) of the image sensor 31, the shadow image in the scanned image is correctly detected and oblique motion of the document sheet is correctly detected.

Embodiment 2.

In Embodiment 2, the oblique motion detecting unit 41b adjusts the aforementioned threshold value on the basis of a difference between a lightness value of a scanned image of an adjustment chart having a predetermined known lightness value (i.e. a lightness value under an irradiation light condition by the image sensor 2) and the predetermined lightness value.

Specifically, the oblique motion detecting unit 41b acquires a scanned image of the adjustment chart from the image sensor 31 and determines a lightness value of (an adjustment chart part of) the scanned image, derives a difference between the determined lightness value and the predetermined known lightness value, and increases or decreases the aforementioned threshold value by a correction amount corresponding to the difference, and thereby adjusts the aforementioned threshold value. If the scanned image is RGB data, the scanned image is converted to L*a*b* data and a lightness value (L*) of the scanned image is derived.

For example, if the aforementioned difference (lightness difference) is equal to or larger than 2.0 then the correction amount is +2, if the aforementioned difference (lightness difference) is equal to or larger than 1.0 and less than 2.0 then the correction amount is +1, if the aforementioned difference (lightness difference) is equal to or larger than 0.0 and less than 1.0 then the correction amount is 0, if the aforementioned difference (lightness difference) is equal to or larger than -1.0 and less than 0.0 then the correction amount is -1, if the aforementioned difference (lightness difference) is equal to or larger than -2.0 and less than -1.0 then the correction amount is -2, and if the aforementioned difference (lightness difference) is equal to or larger than -3.0 and less than -2.0 then the correction amount is -3.

For example, if the threshold value Th is derived as an average value 217 in Embodiment 1 and the lightness difference of the adjustment chart is -1.9 and the correction amount is derived as -2.0, then the threshold value is changed to 215 in this adjustment.

Other parts of the configuration and behaviors of the image scanning device in Embodiment 2 are identical or similar to those in Embodiment 1, and therefore not explained here.

Embodiment 3.

In Embodiment 3, the shading correction unit 41a (a) derives a correction coefficient on the basis of (a1) a color of a scanned image of an adjustment chart having a predetermined known color (i.e. a color under an irradiation light condition by the image sensor 2) and (a2) this predetermined color, and (b) multiplies the image of the document sheet after the shading correction by the correction coefficient and thereby performs correction of the image of the document sheet.

Thus, the shading correcting unit 41a performs correction of the scanned image (an image of the document sheet) in accordance with the following formula.

[Corrected image data (pixel value)] = ([Image data (pixel value) before correction] - [Black reference value of each pixel])/([White reference value of each pixel] - [Black reference value of each pixel]) * [Correction coefficient]

Here, the shading correcting unit 41a derives as the correction coefficient a ratio between a G value in RGB values of the color of the adjustment chart and a G value in RGB values of the scanned image of the adjustment chart.

For example, if the color of the adjustment chart is L*a*b* = (94.0, 0.4, -1.5), the corresponding RGB values are (237, 237, 240). In this case, if RGB values of the scanned image of the adjustment chart are (232, 231, 233), then the correction coefficient is derived as 1.03 (=237/231).

Further, in Embodiment 3, the oblique motion detecting unit 41b multiplies the threshold value by the correction coefficient and thereby adjusts the threshold value.

For example, if the threshold value is derived as an average value 217 in Embodiment 1 and the correction coefficient is 1.03, then the threshold value is changed to 224.

Other parts of the configuration and behaviors of the image scanning device in Embodiment 3 are identical or similar to those in Embodiment 1 or 2, and therefore not explained here.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned Embodiment 1 to 3, the oblique motion detection is performed with the image sensor 31, but the oblique motion detection may be performed with the image sensor 2 as well. In such a case, the opposing member to the image sensor 2 is a pressing plate or the like that presses the document sheet.

**Claims**

1.   An image scanning apparatus, comprising:

a transportation device configured to transport a document sheet along a transportation path;
an image sensor configured to optically scan an image at a predetermined scanning position in the transportation path and generate a scanned image that includes an image of the document sheet;
an opposing member arranged oppositely to the image sensor at the predetermined scanning position; and
an oblique motion detecting unit configured to detect oblique motion of the document sheet on the basis of a shadow image of the document sheet that appears in a scanned image obtained by the image sensor;
wherein the oblique motion detecting unit (a) derives a threshold value on the basis of a density of an image of the opposing member in the scanned image, and (b) detects the shadow image on the basis of the derived threshold value.

2.   The image scanning apparatus according to claim 1, wherein the oblique motion detecting unit derives the threshold value on the basis of (a) a density of an image of the opposing member in a scanned image of a specific test sheet and (b) a density of the shadow image of the specific document sheet in a scanned image of the specific document sheet.

3.   The image scanning apparatus according to claim 1, wherein the oblique motion detecting unit adjusts the threshold value on the basis of a difference between a lightness value of a scanned image of an adjustment chart having a predetermined lightness value and the predetermined lightness value.

4. The image scanning apparatus according to claim 1, further comprising a shading correcting unit configured to perform shading correction for an image of the document sheet;

> wherein the shading correcting unit (a) derives a correction coefficient on the basis of (a1) a color of a scanned image of an adjustment chart having a predetermined color and (a2) this predetermined color, and (b) multiplies the image of the document sheet after the shading correction by the correction coefficient and thereby performs correction of the image of the document sheet; and
> the oblique motion detecting unit multiplies the threshold value by the correction coefficient and thereby adjusts the threshold value.

5. The image scanning apparatus according to claim 1, further comprising a correction processing unit;

> wherein the oblique motion detecting unit determines an oblique motion angle of oblique motion of the document sheet on the basis of the scanned image; and
> the correction processing unit rotates an image of the document sheet in the scanned image by the oblique motion angle toward an opposite direction to the oblique motion and thereby corrects the image of the document sheet.

FIG. 1

EP 4 723 612 A1

# FIG. 2

```
        2                              31
┌─────────────────┐          ┌─────────────────┐
│     IMAGE       │          │     IMAGE       │
│     SENSOR      │          │     SENSOR      │
└─────────────────┘          └─────────────────┘
         ▲                            ▲
         │                            │
         ▼                            ▼                    41
┌──────────────────────────────────────────────────────────┐
│                       CONTROLLER                          │
│                                                           │
│      41a               41b                41c             │
│ ┌────────────┐  ┌─────────────────┐  ┌─────────────────┐  │
│ │  SHADING   │  │  OBLIQUE MOTION │  │   CORRECTION    │  │
│ │ CORRECTING │  │ DETECTING UNIT  │  │ PROCESSING UNIT │  │
│ │    UNIT    │  │                 │  │                 │  │
│ └────────────┘  └─────────────────┘  └─────────────────┘  │
└──────────────────────────────────────────────────────────┘
         │                            │
         ▼           21               ▼          22
┌─────────────────┐          ┌─────────────────┐
│ TRANSPORTATION  │          │    LIFTING      │
│     DEVICE      │          │    DEVICE       │
└─────────────────┘          └─────────────────┘
```

9

FIG. 3

EP 4 723 612 A1

FIG. 4

PRIMARY SCANNING
DIRECTION

SECONDARY SCANNING
DIRECTION

TRANSPORTATION
DIRECTION

A

A

203

202

201

200

Europäisches
Patentamt

European
Patent Office

Office européen
des brevets

# EUROPEAN SEARCH REPORT

**Application Number**

EP 25 20 6398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 003470 A (KYOCERA DOCUMENT SOLUTIONS INC) 17 January 2023 (2023-01-17) | 1,5 | INV. H04N1/387 H04N1/00 |
| A | * the whole document * * figures 1-3,7 * * paragraphs [0006], [0018], [0022] - [0027] * * paragraphs [0043] - [0045] * * paragraphs [0050], [0053], [0058], [0060] * | 2-4 | |
| A | CN 115 379 060 A (KYOCERA DOCUMENT SOLUTIONS INC) 22 November 2022 (2022-11-22) * the whole document * * claims 1-2 * * paragraphs [0002] - [0005] * * paragraphs [0034] - [0054] * * paragraphs [0108] - [0112] * | 1-5 | |
| A | JP 2016 178552 A (PFU LTD) 6 October 2016 (2016-10-06) * the whole document * * paragraph [0001] * * paragraphs [0047] - [0051] * | 1-5 | TECHNICAL FIELDS SEARCHED (IPC) H04N |

The present search report has been drawn up for all claims

| Place of search | Date of completion of the search | Examiner |
|---|---|---|
| The Hague | 21 January 2026 | Thollot, Julien |

## ANNEX TO THE EUROPEAN SEARCH REPORT
## ON EUROPEAN PATENT APPLICATION NO.

EP 25 20 6398

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2026

| Patent document cited in search report | | Publication date | Patent family member(s) | | Publication date |
|---|---|---|---|---|---|
| JP 2023003470 | A | 17-01-2023 | NONE | | |
| CN 115379060 | A | 22-11-2022 | CN 115379060 | A | 22-11-2022 |
| | | | JP 2022178349 | A | 02-12-2022 |
| | | | US 2022377192 | A1 | 24-11-2022 |
| JP 2016178552 | A | 06-10-2016 | JP 6099686 | B2 | 22-03-2017 |
| | | | JP 2016178552 | A | 06-10-2016 |
| | | | US 2016286080 | A1 | 29-09-2016 |

EPO FORM P0459

For more details about this annex : see Official Journal of the European Patent Office, No. 12/82